# EUROPEAN PATENT SPECIFICATION

(11) **EP 0 416 831 B1**
(45) Date of publication and mention of the grant of the patent: **15.03.1995**
(21) Application number: 90309593.3
(22) Date of filing: 03.09.1990
(51) Int. Cl.: F16K 15/03, F16K 15/14

(54) **Seal member and assembly**
Dichtelement und Baueinheit
Elément d'étanchéité et assemblage

(30) Priority: 06.09.1989 GB 8920103
(43) Date of publication of application: 13.03.1991
(73) Proprietor: Meggitt (U.K.) Limited, Wimborne, Dorset, BH21 4EL (GB)
(72) Inventor: Leaver, Dennis Alfred, Surrey KT18 7JK (GB); Smith, Maurice James, Twickenham, TW2 7HT (GB)
(74) Representative: Skone James, Robert Edmund

(56) References cited:
- CH-A- 399 101
- DE-A- 2 304 274
- US-A- 3 496 969
- US-A- 3 994 319
- US-A- 4 585 031

## Description

The invention relates to a seal member and assembly of the non-return type.

Non-return valves of various types are well known and are used in a wide variety of fields but particularly for controlling fluid flows. Conventional seals of this type have to be reliable but relatively cheap to allow mass production.

US-A-3994319 describes a reed type valve formed of a composite material with reinforcing fibres to increase the resistance to fatigue of the valve.

CH-A-399101 describes a flexible seal member for mounting in use to a wall of an opening. The member has a sealing surface for sealing against a seat and is constructed so as to flex preferentially in one direction away from its normal sealing position, so as to break the seal.

In accordance with the present invention, a flexible seal member for mounting in use to a wall of an opening has a sealing surface for sealing against a seat and is constructed so as to flex preferentially in one direction away from its normal, sealing position so as to break the seal. The member comprises a relatively open fabric coated with an elastomeric material which is bonded to one or more layers of substantially closer mesh fabric also coated with an elastomeric material which provides stiffening against flexure in a direction opposite to the one direction.

We have devised a new form of seal member which can be incorporated into a wide variety of seal assemblies for controlling the flow or movement of gases, liquids, powders or solids. For example, the seal member may be used in a seal assembly for permitting easy passage of an operating rod or the like through an opening while maintaining resistance to external air pressure as might be encountered in aircraft or pressurised buildings.

In the preferred case the substantially closer mesh fabric comprises a close woven glass cloth, although synthetic fabrics such as polyamide, polyimide, ceramic, metallics or others can be used where the operating conditions dictate.

The relatively open fabric may comprise an open woven terylene or nylon material although others such as glass, ceramic or carbon material could be used where performance dictates. This material is also coated with elastomeric material. Fabric can be woven or knitted.

The elastomeric material in this instance is a silicone rubber of approximately 60° IRHD. It is used to withstand high and low temperatures, it has good resistance to lubricants and fuels, and is ozone resistant. Other elastomeric materials such as nitrile or neoprene rubber could be used depending on the performance requirements.

In the preferred arrangement, a seal assembly is provided comprising a wall defining an opening and at least one seal member according to the present invention arranged such that the sealing surface on the seal member seals against the wall of the opening.

In some cases, the seal assembly may comprise two or more members according to the invention, arranged such that the sealing surfaces of the members seal against each other.

Some examples of seal members and assemblies according to the present invention will now be described with reference to the accompanying drawings, in which:-
Figure 1 is a partial, perspective view of a seal member;
Figure 2 illustrates the seal member of Figure 1 incorporated into a seal assembly;
Figure 3 is a perspective view of a second example of a seal assembly;
Figure 4 is an end view of the assembly shown in Figure3;
Figure 5 is an end view of the assembly shown in Figure 3 with the seal open;
Figures 6A-6F illustrate different forms of seal assembly;
Figure 7 illustrates a diaphragm seal assembly; and
Figure 8 illustrates an arrangement allowing preferential bending.

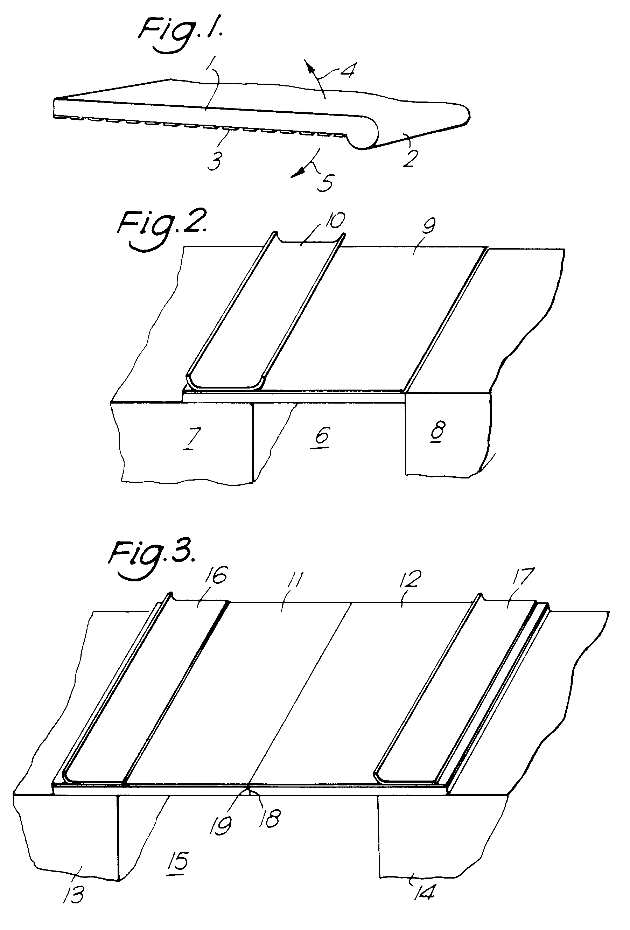

The seal member shown in Figure 1, which may be in the form of a strip or sheet comprises an elastomeric or elastomeric and fabric sheet 1 having a sealing surface 2 formed by an enlarged end of generally circular cross-section. Other cross-sections such as D-section or square section are also possible. One surface of the sheet 1 has bonded to it a single ply of woven glass fabric 3. The effect of the glass fabric ply 3 is to substantially prevent flexure of the member 1 in one direction, as indicated by an arrow 4, but to permit flexure in the opposite direction, as indicated by an arrow 5.

Figure 2 illustrates one example of a seal assembly incorporating a seal member of the type shown in Figure 1. In this example, a channel 6 is defined between opposing wall members 7, 8 with one end of a seal member 9 clamped by means of a clamp plate 10 to the wall 7. The seal member 9 extends across the channel 6 into sealing engagement with the wall 8 (as shown in Fig. 2). In this example, the glass fabric ply is provided on the upper surface of the seal member 9 thus restricting downward movement of the seal member 9 while permitting upward movement. The woven glass fabric 3 is arranged with either the warp or weft substantially parallel with the line of action to achieve maximum stiffness.

Figure 3 illustrates a second example of a seal assembly in which a pair of seal members 11, 12 of the type shown in Figure 1 are clamped to respective walls 13, 14, defining a channel 15, via clamp plates 16, 17. The sealing surfaces 18, 19 of the seal members 11, 12 abut one another to seal access to the channel 15. In this example, the single glass fabric ply is provided on the lower surface of the seal members 11, 12 thus restricting upward flexure of the seal members but permitting downward flexure.

Figure 4 is an end view of the assembly shown in Figure 3 and indicates that the seal members 11, 12 can withstand pressures of up to 2psi on their under surfaces.

Figure 5 illustrates the assembly shown in Figures 3 and 4 but following the insertion of a slat 20 through the channel 15. In this situation, the seal members 11, 12 continue to seal against the slat 20.

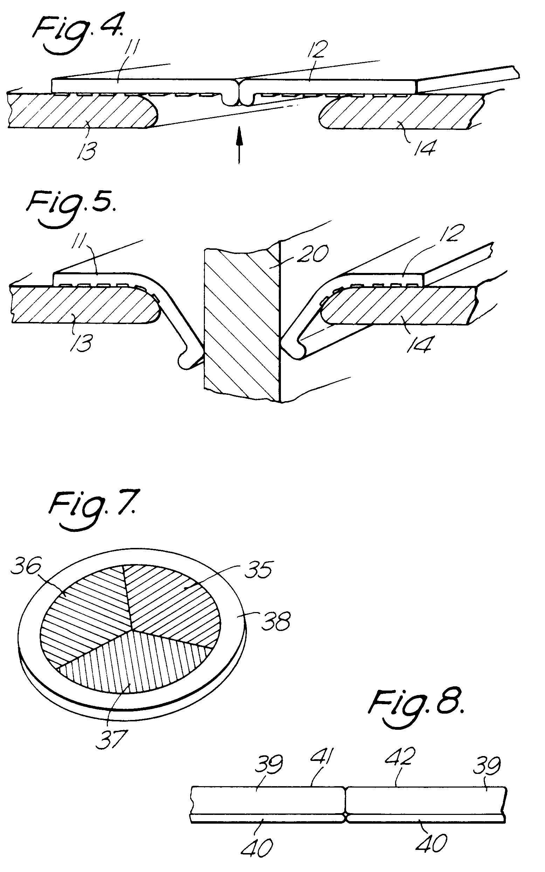

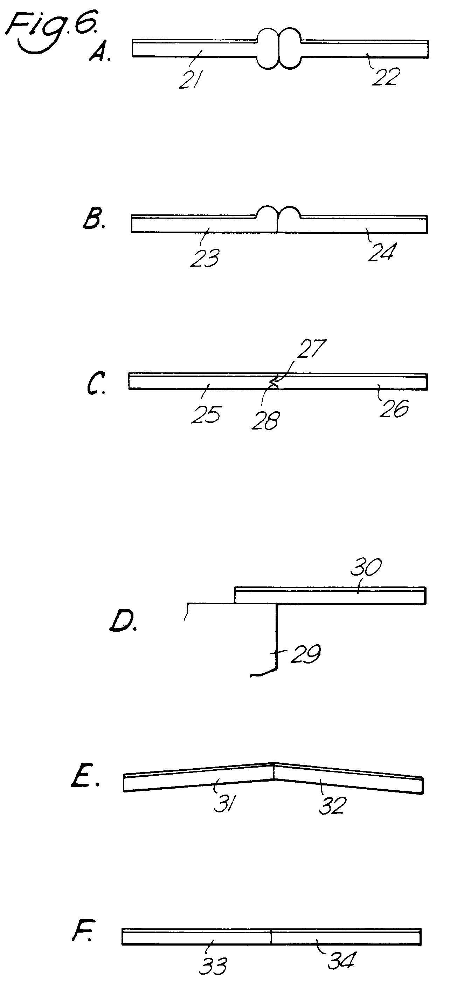

Figure 6 illustrates various different forms of seal assembly. In Figure 6A a double rolling butt seal is illustrated between seal members 21, 22. Figure 6B illustrates a single rolling butt seal between members 23 and 24. Figure 6C illustrates a locking butt seal between members 25, 26 in which a tongue 27 on the seal member 26 is located in a groove 28 on the sealing surface of the member 25.

Figure 6D illustrates a seal between a wall 29 and a sealing member 30 in which the sealing member 30 overlaps the wall 29.

Figure 6E illustrates a wedge butt seal between sealing members 31, 32 and Figure 6F illustrates a straight butt seal between members 33, 34 similar to that shown in Figure 3.

Figure 7 illustrates a diaphragm seal formed by three sealing members 35-37 mounted within an annulus 38 and with sealing surfaces which seal against one another. Other numbers of sealing members could also be used.

In Figure 8 the layers 39,40 of each seal member 41,42 are formed from the same material. The difference in thickness or stiffness is chosen to cause preferential bending of the valve in a desired direction.

## Claims

1. A flexible seal member (1) for mounting in use to a wall of an opening, the member having a sealing surface (2) for sealing against a seat and being constructed so as to flex preferentially (5) in one direction away from its normal, sealing position so as to break the seal, characterised in that the member comprises a relatively open fabric coated with an elastomeric material which is bonded to one or more layers of substantially closer mesh fabric (3) also coated with an elastomeric material which provides stiffening against flexure in a direction opposite to the one direction.

2. A flexible seal member according to claim 1, wherein the substantially closer mesh fabric comprises a close woven glass cloth.

3. A flexible seal member according to claim 2, wherein the substantially closer mesh fabric comprises synthetic fabric.

4. A flexible seal member according to any one of claims 1 to 3, wherein the relatively open fabric comprises an open woven terylene or nylon fabric.

5. A flexible seal member according to any one of claims 1 to 4, wherein the relatively open fabric is coated with a silicone rubber coating.

6. A flexible seal member according to claim 1, comprising at least two layers of the same material of different thicknesses (39,40).

7. A seal assembly at with least one seal member (9) according to any of claims 1 to 6 mounted to part of a wall (7,8) defining an opening and arranged such that the sealing surface on the seal member seals against a seat defined by another part of the wall defining the opening.

8. A seal assembly with at least one seal member according to any of claims 1 to 6, the assembly comprising a wall (13,14) defining an opening, and two or more members (11,12) according to any of claims 1 to 6 mounted to the wall and arranged such that the sealing surfaces (18,19) of the members seal against each other.

## Patentansprüche

1. Ein flexibles Dichtelement (1) zur verwendungsmäßigen Anbringung an einer Wand einer Öffnung, wobei das Element eine Dichtfläche (2) zur Abdichtung gegen einen Sitz aufweist und so aufgebaut ist, daß es Vorzugsweise in einer Richtung weg (5) von seiner normalen, dichtenden Lage biegbar ist, um die Dichtung aufzuheben, **dadurch gekennzeichnet**, daß das Element ein relativ offenes Gewebe umfaßt, das mit einem Elastomermaterial beschichtet ist, das an eine oder mehrere Schichten im wesentlichen engeren Maschengewebes (3) gebunden ist, das ebenfalls mit einem Elastomermaterial beschichtet ist, das für eine versteifung gegen Biegen in einer zu der einen Richtung entgegengesetzten Richtung sorgt.

2. Ein flexibles Dichtelement nach Anspruch 1, bei dem im wesentlichen engere Maschengewebe ein enges gewebtes Glasfasergewebe umfaßt.

3. Ein flexibles Dichtelement nach Anspruch 2, bei dem im wesentlichen engere Maschengewebe ein synthetisches Gewebe umfaßt.

4. Ein flexibles Dichtelement nach einem der Ansprüche 1 bis 3, bei dem das relativ offene Gewebe ein offenes gewebtes Terylen- oder Nylongewebe umfaßt.

5. Ein flexibles Dichtelement nach einem der Ansprüche 1 bis 4, bei dem das relativ offene Gewebe mit einer Silikon-Kautschuk-Beschichtung beschichtet ist.

6. Ein flexibles Dichtelement nach Anspruch 1, umfassend mindestens zwei Schichten des gleichen Materials verschiedener Stärken (39, 40).

7. Ein Dichtungsaufbau mit mindestens einem Dichtelement (9) nach einem der Ansprüche 1 bis 6, angebracht an einem Teil einer Wand (7, 8), die eine Öffnung bestimmt, und so angeordnet, daß die Dichtfläche an dem Dichtelement gegen einen Sitz dichtet, der von einem anderen Teil der die Öffnung bestimmenden Wandung bestimmt ist.

8. Ein Dichtungsaufbau mit mindestens einem Dichtelement nach einem der Ansprüche 1 bis 6, wobei der Aufbau eine eine Öffnung bestimmende Wand (13, 14) umfaßt und zwei oder mehr Elemente (11, 12) nach einem der Ansprüche 1 bis 6, die an der Wand angebracht und so angeordnet sind, daß die Dichtflächen (18, 19) der Elemente gegeneinander dichten.

## Revendications

1. Organe d'étanchéité flexible (1) destiné à être monté en utilisation sur la paroi d'une ouverture, l'organe présentant une surface d'étanchéité 2 afin de réaliser une étanchéité contre un siège, et étant construit de manière fléchir préférentiellement (5) dans une direction en éloignement de sa position normale d'étanchéité, de manière à rompre l'étanchéité, caractérisé en ce que ledit organe comprend un tissu relativement ouvert revêtu d'un matériau élastomère qui est collé à une couche, ou plusieurs, d'un tissu (3) à mailles sensiblement plus serrées, également revêtu d'un matériau élastomère qui assure un raidissement à l'encontre d'une flexion dans une direction opposée à la première direction précitée.

2. Organe d'étanchéité flexible selon la revendication 1, dans lequel le tissu à mailles sensiblement plus serrées comprend un tissu de verre à tissage serré.

3. Organe d'étanchéité flexible selon la revendication 2, dans lequel le tissu à mailles sensiblement plus serrées comprend un tissu synthétique.

4. Organe d'étanchéité flexible selon l'une quelconque des revendications 1 à 3, dans lequel le tissu relativement ouvert comprend un tissu en térylène ou en nylon à tissage ouvert.

5. Organe d'étanchéité flexible selon l'une quelconque des revendications 1 à 4, dans lequel le tissu relativement ouvert est revêtu d'un revêtement de caoutchouc au silicone.

6. Organe d'étanchéité flexible selon la revendication 1, comprenant au moins deux couches du même matériau, d'épaisseurs différentes (39, 40).

7. Ensemble d'étanchéité comprenant un organe d'étanchéité (9) selon l'une quelconque des revendications 1 à 6, monté sur une partie d'une paroi (7, 8) qui définit une ouverture, et agencé de telle manière que la surface d'étanchéité sur l'organe d'étanchéité assure une étanchéité contre un siège défini par une autre partie de la paroi qui définit l'ouverture.

8. Ensemble d'étanchéité comprenant au moins un organe d'étanchéité selon l'une quelconque des revendications 1 à 6, l'ensemble comprenant une paroi (13, 14) qui définit une ouverture, et deux organes ou plus (11, 12) selon l'une quelconque des revendications 1 à 6 montés sur la paroi et agencés de telle manière que les surfaces d'étanchéité (18, 19) des organes assurent une étanchéité les unes contre les autres.
